# EUROPEAN PATENT SPECIFICATION

(11) **EP 2 352 936 B1**
(45) Date of publication and mention of the grant of the patent: **21.11.2012**
(21) Application number: 09760116.5
(22) Date of filing: 25.11.2009
(51) Int. Cl.: F16H 55/16

(54) **A GEAR**
GETRIEBE
ENGRENAGE

(30) Priority: 03.12.2008 GB 0821985
(43) Date of publication of application: 10.08.2011
(73) Proprietor: Rolls-Royce PLC, London SW1E 6AT (GB)
(72) Inventor: BISHOP, Jeffrey Charles, Derby DE65 6BU (GB)
(74) Representative: Roberts, Nicholas John
(86) International application number: PCT/EP2009/008368
(87) International publication number: WO 2010/063393

(56) References cited:
- EP-A- 1 380 772
- EP-A- 1 555 584
- DE-A1-102004 037 540
- DE-U1-202007 016 135

## Description

The present invention relates to a gear, particularly but not exclusively a gear for use in a power transmission arrangement.

It is known to provide power transmission arrangements which comprise a plurality of intermeshing gears. To permit smooth intermeshing, the gears have to be manufactured with clearances between intermeshing teeth. These clearances are referred to as "backlash clearances". In certain circumstances, such as at low speeds, the gears can randomly oscillate across the backlash clearances, causing a noise problem.

This problem has been overcome in a number of ways, typically involving the provision of additional or auxiliary gears. Such arrangements, while suitable where the power transmission arrangement comprises a single transfer from one set of gears to another, are less suitable for use in power transmission arrangements where power is to be transferred across multiple gears in series.

One gearing arrangement is shown in DE 20 2007 016135 which describes a gear formed by teeth having elements divided by a gap.

According to a first embodiment of the present invention, there is provided a gear for use in a power transmission arrangement, the gear including a body, a plurality of split teeth projecting outwardly from the body, each tooth including a first part and a second part which each project outwardly from the body, each tooth defining a gap between the first part and the second part, each tooth part including an interlock formation which corresponds with the interlock formation of the other tooth part to limit relative movement of the tooth parts in use.

Possibly, the interlock formations limit relative circumferential movement. Possibly the interlock formations limit relative radial movement. Possibly the interlock formations limit both relative radial and circumferential movement.

The interlock formation of one tooth part may include a projection, and the interlock formation of the other tooth part may define a recess.

Possibly the gear defines a plurality of relieving holes, and each gap extends from one relieving hole.

According to a second embodiment of the present invention, there is provided a gear for use in a power transmission arrangement, the gear including a body, a plurality of split teeth projecting outwardly from the body, each tooth including a first part and a second part which each project outwardly from the body, each tooth defining a convoluted or serpentine gap between the first part and the second part, the gear body defining a plurality of relieving holes, each gap extending from one relieving hole.

The gap may be asymmetrically positioned within the tooth.

Possibly the first part is a different size from the second part.

Possibly the gear includes a resilient material which is positioned within the gap.

Possibly the gear is formed of a metal material.

Possibly the gear is formed by laser cutting. Possibly, in an unloaded condition, the gap may have a minimum width of 0.15mm.

The resilient material may define a cavity.

Possibly the gear defines a plurality of relieving holes, each gap extending from one relieving hole, and the gear includes a resilient material which is positioned within each hole.

Possibly the resilient material is an elastomeric material.

Possibly, the power transmission arrangement is for use in a gas turbine engine.

According to a third embodiment of the present invention, there is provided a power transmission arrangement, the power transmission arrangement including a gear, the gear being in accordance with any of the preceding statements.

According to a fourth embodiment the present invention, there is provided a method of transmitting power, the method including providing a power transmission arrangement in accordance with the immediately preceding statement.

According to a fifth embodiment of the present invention, there is provided a gas turbine engine, the gas turbine engine including a gear, the gear being in accordance with any of the preceding statements.

Embodiments of the present invention will now be described, by way of example only, and with reference to the accompanying drawings, in which:-
Fig. 1 is a schematic perspective view of parts of a power transmission arrangement;
Fig. 2 is a side view of a part of a gear, being a first embodiment of the invention;
Fig. 3 is a side view of part of a gear, being a second embodiment of the present invention;
Fig. 4 is a side view of part of a gear, being a third embodiment of the present invention;
Fig. 5 is a side view of part of a gear, being a fourth embodiment of the present invention;
Fig. 6 is a side view of part of a gear, being a fifth embodiment of the present invention;
Fig. 7 is a side view of part of a gear, being an eighth embodiment of the present invention;

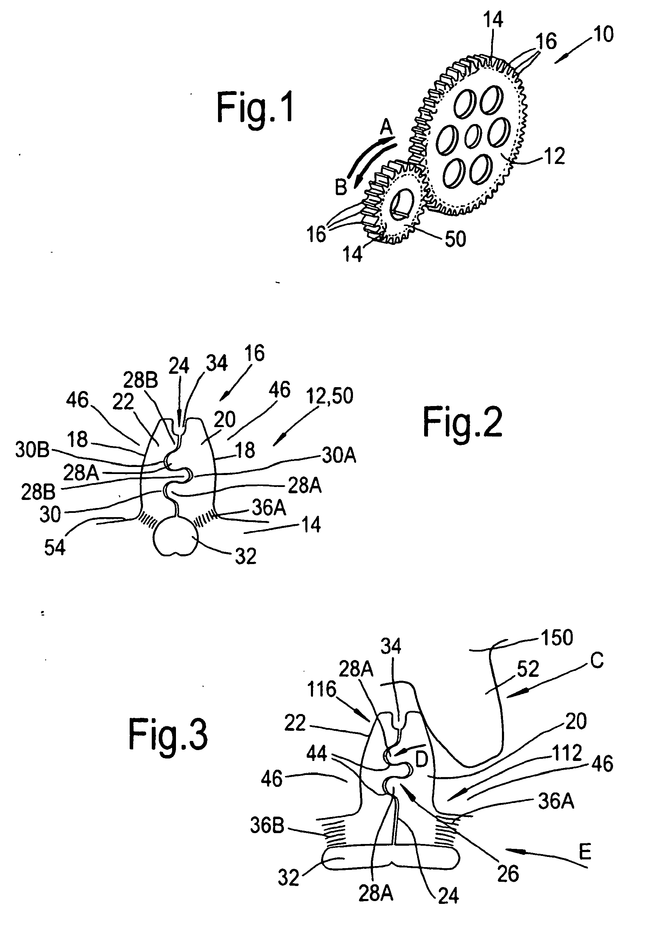

Referring to the drawings, Fig. 1 shows a power transmission arrangement 10 including a pair of similar, though differently sized, intermeshing gears comprising a first gear 12 and a second gear 50, each gear 12, 50 including a body 14, and a plurality of teeth 16 (only a few of which are labelled), the teeth 16 projecting radially outwardly from the body 14.

In use, as one of the gears 12, 50 is rotated as indicated by arrows A or B, the intermeshing of the teeth 16 will drive the other of the gears 12, 50.

Fig. 2 shows a detail of part of one of the gears 12, 50. Each tooth 16 includes a first tooth part 20 and a second tooth part 22, each of the first and second tooth parts 20, 22 projecting outwardly from the body 14. The first and second tooth parts 20, 22 define a gap 24 therebetween. At the outer extremity of the tooth 16, the gap 24 extends to form a relatively enlarged mouth 34. The body 14 defines a plurality of relieving holes 32, one of which is shown in Fig. 2, each relieving hole 32 being associated with one tooth 16, the gap 24 extending radially outwardly from the associated relieving hole 32. The relieving hole 32 is located in its entirety radially inwardly of the tooth 16.

The first and second tooth parts 20, 22 include interlock formations 26 which include corresponding projections 28 and recesses 30, so that the gap 24 has a convoluted shape. Thus, the or each projection 28 of one of the tooth parts 20, 22 corresponds with the or one recess 30 of the other tooth part 20, 22.

In use, the arrangement of the tooth 16 in parts 20, 22 with a convoluted gap 24 therebetween provides the tooth 16 with a resilient property. As the tooth 16 intermeshes into tooth spaces 46 defined between the teeth 16 of the other gear, an outer flank 18 of one of the tooth parts 20, 22 will initially contact the other gear and will deform, the deformation movement being pivotal around a relatively narrow neck area 36 located between the relieving hole 32 and an outer surface 54 of the gear. The intermeshing of the gears 12, 50 forces the first tooth part 20 towards the second tooth part 22, closing the gap 24 until the first tooth part 20 contacts the second tooth part 22.

In this contact condition, any further deformation of the first tooth part 20 can only occur with deformation of the second tooth part 22 also. Thus in the contact condition, the full tooth 16 is engaged. Thus, the present invention provides a two stage contact between the gears, in which, in the first stage, there is deformation of one of the two parts, and in the second stage, there is engagement of the full tooth. This provides a gear with a shock absorbing property, and backlash is reduced or eliminated. The convoluted shape of the gap 24 with the projections 28 and the recesses 30 limits the relative circumferential and radial movement of the first and second tooth parts 20, 22.

The convoluted shape of the gap offers an additional advantage in that the contact point of the two parts is more evenly shared along the length of the gap. Where a straight gap is used the deformation movement of the parts is likely to cause the radially outermost tips of the tooth part 20, 22 to come into point contact, with an increased risk of wear and/or damage though it is possible to mitigate damage by providing an enlarged mouth for the gap.

Fig. 3 shows another first gear 112 which includes a plurality of outwardly projecting teeth 116, only one of which is shown in Fig. 3. Many features of the tooth 116 shown in Fig. 3 are the same as or similar to the tooth 16 shown in Fig. 2, and only those features which are different will be described here for the sake of brevity. Features which are the same or similar have been given the same reference numerals.

Whereas in the embodiment shown in Fig. 2, the relieving hole 32 is located in its entirety radially inwardly of the tooth 16, in the embodiment shown in Fig. 3, the relieving hole 32 extends further circumferentially. This has the effect of altering the position of the neck area 36, moving the neck area 36 further away from the gap 24. This in turn has the effect of altering the deformation movement of the tooth parts 20, 22 in use. The deformation movement of the embodiment shown in Fig 3 will have a greater radial component than the embodiment shown in Fig 2, because of the greater distance of the neck area 36, which forms a pivot, from the gap 24.

Whereas Fig. 2 shows the tooth 16 in an unloaded condition, in which no forces are being applied to the tooth 16, Fig. 3 shows the tooth 116 in use. The first gear 112 is meshing with a second gear 150, and as shown in Fig. 3 the tooth 116 of the first gear 112 has come into contact with a tooth 52 of the second gear 150. In this example, the second gear 150 is the driving gear as indicated by arrow C, and the first gear is the driven gear rotating anti clockwise as indicated by arrow E, but in other examples, either gear could be the driving gear and the gears could rotate in either direction. The tooth 52 of the second gear 150 contacts the first tooth part 20 of the tooth 116, causing deformation movement of the first tooth part 20 relative to the second tooth part 22 as indicated by arrow D in Fig. 3.

The deformation movement is a pivotal movement about the neck area 36A, so that as indicated by arrow D, the first tooth part 20 moves circumferentially towards the second tooth part 22 and radially inwardly. The deformation movement of the first tooth part 20 causes the gap 24 to decrease, until parts of the interlock formations 26 of the first and second tooth parts 20, 22 come into contact with each other, limiting the relative movement of the first tooth part 20 and the second tooth part 22. As shown in Fig. 3, the inward radial component of the deformation movement means that it is the radially inward surfaces of the projections 28A of the first tooth part 20 which make contact with the second tooth part 22, forming contact areas 44.

In comparison, the embodiment shown in Fig. 2 has neck areas 36A which are relatively closer to the gap 24, so that the deformation movement in use has a relatively smaller inwardly radial component compared to the embodiments shown in Fig. 3. Thus, by altering the size and shape of the relieving hole 32, in conjunction with the shape of the interlock formations 26, the performance of the power transmission arrangement can be adjusted.

The convoluted shape of the gap 24 provides the advantage that the deformation movement does not result in a single point of contact between the first and second tooth parts 20, 22, which could lead to wear and/or damage. The curved surfaces of the projections 28 and recesses 30 serve to distribute the forces being transmitted over a relatively large contact area 44. The inwardly radial component of the deformation movement will tend to cause contact between the first and second tooth parts 20, 22 at the radially outermost parts of the tooth parts 20, 22. The relatively enlarged mouth 34 prevents such point contact occurring.

Although the interlock formations 26 shown in Figs. 2 and 3 are not symmetrical, the gap 24 is substantially aligned along and about the centre line of the tooth 16, 116, as is the relieving hole 32. Thus, the second tooth part 22 will deform in a similar manner to the first tooth part 20, should the direction of movement of the gears reverse.

In one example, the power transmission arrangement 10 could include a second gear 150 as shown in Fig. 3, with conventional teeth 52. In another example, the second gear 150 could also include teeth 116 which are similar to those described for the first gear 112. The teeth 116, the spaces 46 and the gaps between the tooth parts 20, 22 could be dimensioned so that in use, as the gears 112, 150 mesh, at least one of the tooth parts 20, 22 has to deform to permit the tooth 116 to fit into the tooth space 46. In this example, the fit of the first and second parts 20, 22 into the tooth spaces 46 prevents backlash occurring.

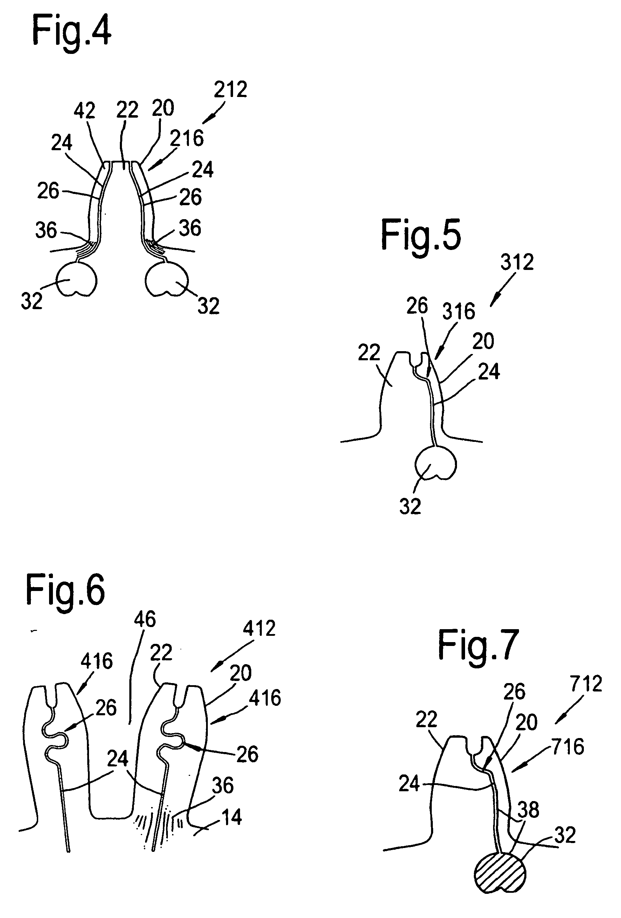

Figs. 4 to 10 show other examples of the present invention, in which many features are the same or similar to those already described, and again only those features which are different will be described for the sake of brevity. Where features are the same or are similar, the same reference numerals have been used.

Fig. 4 shows a third embodiment of the invention, in which a first gear 212 includes a plurality of teeth 216, each tooth 216 including a first tooth part 20, a second tooth part 22 and a third tooth part 42, gaps 24 being defined between the first and second teeth parts 20, 22 and the second and third teeth parts 22, 42, the gear 212 defining a pair of spaced, similar holes 32, one of the gaps 24 extending from each hole 32. This tooth arrangement provides, in use, a similar operating characteristic in each rotational direction. In comparison with the arrangements shown in Figs. 2 and 3, the neck areas 36 are relatively thin, reducing the force required for deformation movement of the first and third parts 20, 42, giving the gear a "softer" operating characteristic. The second tooth part 22 forms a relatively solid central core which is resistant to deformation movement.

Fig. 5 shows a fourth embodiment of the invention, in which a first gear 312 includes a plurality of teeth 316, each tooth 316 including a first tooth part 20 and a second tooth part 22, a gap 24 being defined between the first and second parts 20, 22, the gap 24 extending from a relieving hole 32 defined in the body 14 of the first gear 312. In this embodiment, the gap 24 and relieving hole 32 are asymmetrically positioned, so that the first tooth part 20 is relatively thin compared to the second tooth part 22, thus providing an asymmetric operating characteristic in which, in a first rotational direction, the first tooth part 20 will deform relatively easily until contact occurs between the first tooth part 20 and the second tooth part 22, but in a second, opposite rotational direction, the second tooth part 22 is relatively more resistant to deformation. Hence, in the first rotational direction the gear would exhibit a two stage operational characteristic, which can be characterised as "soft" followed by "hard", whereas in the second rotational direction, the operational characteristic can be characterised as "hard" alone, i.e. a single stage operating characteristic.

Fig. 6 shows a fifth embodiment of the invention, in which a gear 412 comprises a plurality of teeth 416. In this embodiment, there is no relieving hole 32, and the gap 24 is substantially aligned along the notional centre line of the tooth 416, so that the operational characteristic is symmetrical, being the same in each rotational direction and in comparison with those embodiments employing a relieving hole 32, the tooth parts 20, 22 are relatively stiff and resistant to deformation movement as the neck area 36 is relatively large.

Fig. 7 shows an sixth embodiment of the invention in which a gear 712 includes a plurality of teeth 716 which are similar to the teeth 316 shown in Fig. 5, except that the gap 24 and the cavity 32 are filled with a filler material 38 having a resilient property, such as an elastomeric material. In use, the filler material 38 progressively resists deformation of the tooth parts 20, 22, until the force acting upon the flank 18 of the tooth to deform the tooth part 20 is equal and opposite to the resilient force within the compressed filler material 38. Thus, the choice of the filler material 38 and the size of gap 24 permits the operational characteristics of the gear 512 to be determined. The filler material providing an increasing resistance to the deformation movement. A further advantage of the filler material 38 is that contact between the tooth parts 20, 22 is eliminated, thus reducing wear of the tooth parts 20, 22.

Where a relatively wide gap is used it is possible to arrange the filler material such that it defines a internal cavity. In use, the cavity allows deformation movement of the tooth parts until the cavity substantially no longer exists and further deformation movement can only occur by compression of the filler material 38. Thus, the arrangement of the tooth provides a two stage deformation movement so that the gear exhibits a "relatively soft" followed by "relatively hard" operational characteristic.

The filled gap 24 may be symmetrically or asymmetrically positioned within the tooth. The asymmetric position of the gap 24 provides different operational characteristics of the gear 812 depending on the direction of rotation.

In any of the embodiments above the tooth flanks 18, which are the contact surfaces of the tooth 16 in use, could be of an involute form. In one example, the shape of the tooth flanks 18 could be arranged to adopt an involute form in the contact condition.

Various other modifications could be made without departing from the scope of the invention. Any combination of any of the features described in any of the embodiments could be combined in any suitable arrangement. Power transmission arrangements according to the invention could include a series of gears, which could include gears having conventional solid teeth and gears as described above in any suitable combination.

The gears could be formed of any suitable material. In one example the gears are formed of metal. The gears could be formed by using any suitable method. In one example, the gears could be formed from blanks which are laser cut. In other examples, the gears could be formed from blanks which are cut by water jets or wire erosion techniques. Alternatively, gears could be formed by any other suitable process such as casting, forging, pressing, blanking or sintering.

The filling material 38 could be pre-stressed to give a true involute shape in the contact condition.

The gap 24 could be of any suitable size, shape and location, and there could be any suitable number of gaps defined. The relieving hole could be of any suitable size, shape and location, and the gear could include any suitable number of relieving holes. The filler material could be formed of any suitable material.

In one example, the teeth 16 are sized for negative backlash, so that the teeth 16 are relatively oversized in comparison with the tooth spaces 46 so that as the teeth 16 mesh into position in the spaces 46, the teeth are deformed to produce backlash free meshing.

In one example, the width of the gap is a minimum of .15mm, and the outside diameter of the gear is 30mm. Where the maximum torque requirement of the gear is within the elastic scope of a single tooth part, then the width of the gap can be of any suitable size.

By convoluted it is meant that the gap is not straight. A serpentine gap is convoluted and has one or more bends or at least one bend of non-uniform curvature.

The invention thus provides a power transmission arrangement in which backlash is eliminated or reduced, so that the power transmission arrangement operates more quietly than conventional arrangements. The power transmission arrangement can be "tuned" to provide different operational characteristics, which may be different depending on the rotational direction. The power transmission arrangements can include a plurality of gears in series. The arrangement of the present invention does not increase the number of components, and provides the advantage that the component weights are reduced. Motion input at one end of the power transmission arrangement results in an immediate response at the other end of the power transmission arrangement, as does a reversal of rotational direction.

The power transmission arrangement of the present invention is particularly suited for use with electrical stepper motor driven mechanical control arrangements such as those on instrumentation gear boxes and stepper motion transfer gears for control systems for gas turbine engines. However, the apparatus of the present invention can be used for any application requiring smooth and/or quiet operation. The components of the transmission arrangements of the present invention are relatively simple and cheap to manufacture.

## Claims

1. A gear (12, 50, 112, 212, 312, 412, 712) for use in a power transmission arrangement (10) the gear includes a body (14), a plurality of split teeth (16, 116, 216, 316, 416, 716) projecting outwardly from the body, each tooth including a first part (20) and a second part (22) which each project outwardly from the body, each tooth defining a gap (24) between the first part and the second part, **characterized in that** each tooth part including an interlock formation (26) which corresponds with the interlock formation (26) of the other tooth part to limit relative movement of the tooth parts in use.

2. A gear according to claim 1, in which the interlock formations limit relative circumferential movement.

3. A gear according to claims 1 or 2, in which the interlock formations limit relative radial movement.

4. A gear according to claim 3 when dependent on claim 2, in which the interlock formations limit both relative radial and circumferential movement.

5. A gear according to any of the preceding claims, in which the interlock formation of one tooth part includes a projection (28) and the interlock formation of the other tooth part defines a recess (30).

6. A gear according to any of the preceding claims, in which the gear defines a plurality of relieving holes (32), and each gap extends from one relieving hole.

7. A gear (12, 50, 112, 212, 312, 712) for use in a power transmission arrangement (10), **characterised in that** the gear includes a body (14), a plurality of split teeth (16, 116, 216, 316, 716, 916) projecting outwardly from the body, each tooth including a first part (20) and a second part (22) which each project outwardly from the body, each tooth defining a convoluted gap (24) between the first part and the second part, the gear body defining a plurality of relieving holes (32), each gap extending from one relieving hole.

8. A gear according to claim 7, in which the relieving holes (32) are asymmetrically positioned relative to a centerline of the tooth having the convoluted gap extending from the relieving hole.

9. A gear according to any of the preceding claims, in which the gap is asymmetrically positioned within the tooth.

10. A gear according to any of the preceding claims, in which the gear includes a resilient material (38) which is positioned within the gap.

11. A gear according to claim 10, in which the resilient material defines a cavity (40).

12. A gear according to any of the preceding claims, in which the gear defines a plurality of relieving holes (32), each gap extending from one relieving hole, and the gear includes a resilient material (38) which is positioned within each hole.

13. A gear according to any of claims 10 to 12, in which the resilient material is an elastomeric material.

14. A power transmission arrangement including a gear, the gear being as defined in any of the preceding claims.

15. A method of transmitting power, **characterised in that** the method includes providing a power transmission arrangement, the power transmission arrangement being according to claim 14.

## Patentansprüche

1. Zahnrad (12, 50, 112, 212, 312, 412, 712) zur Verwendung in einer Kraftübertragungsanordnung (10), wobei das Zahnrad einen Körper (14) und eine Mehrzahl geschlitzter Zähne (16, 116, 216, 316, 416, 716) aufweist, wobei jeder Zahn einen ersten Teil (20) und einen zweiten Teil (22) aufweist, der jeweils von dem Körper auswärts vorspringt, und wobei jeder Zahn einen Spalt (24) zwischen dem ersten Teil und dem zweiten Teil bildet, **dadurch gekennzeichnet, dass** jeder Zahnteil eine Formschluss-Formation (26) aufweist, die mit der Formschluss-Formation (26) des anderen Zahnteils korrespondiert, um im Betrieb eine Relativbewegung der Zahnteile zu begrenzen.

2. Zahnrad nach Anspruch 1, wobei die Formschluss-Formationen eine relative umfangsmäßige Bewegung begrenzen.

3. Zahnrad nach Anspruch 1 oder 2, wobei die Formschluss-Formationen eine relative Radialbewegung begrenzen.

4. Zahnrad nach Anspruch 3 in Abhängigkeit von Anspruch 2, wobei die Formschluss-Formationen sowohl eine relative radiale als auch umfangsmäßige Bewegung begrenzen.

5. Zahnrad nach einem der vorhergehenden Ansprüche, wobei die Formschluss-Formation an einem Zahnteil einen Vorsprung (28) und die Formschluss-Formation am anderen Zahnteil eine Aussparung (30) umfasst.

6. Zahnrad nach einem der vorhergehenden Ansprüche, wobei das Zahnrad eine Mehrzahl von Entlastungsöffnungen (32) aufweist, und jeder Spalt von einer Entlastungsöffnung aus verläuft.

7. Zahnrad (12, 50, 112, 212, 312, 712) zur Verwendung in einer Kraftübertragungsanordnung (10), **dadurch gekennzeichnet, dass** das Zahnrad einen Körper (14) und eine Mehrzahl von geschlitzten Zähnen (16, 116, 216, 316, 716, 916) aufweist, die von dem Körper auswärts vorspringen, wobei jeder Zahn einen ersten Teil (20) und einen zweiten Teil (22) aufweist, die jeweils von dem Körper auswärts vorspringen, wobei jeder Zahn einen gewellten Spalt (24) zwischen dem ersten Teil und dem zweiten Teil bildet, und wobei das Zahnrad eine Mehrzahl von Entlastungsöffnungen (32) aufweist, und jeder Spalt von einer Entlastungsöffnung aus verläuft.

8. Zahnrad nach Anspruch 7, wobei die Entlastungsöffnungen (32) asymmetrisch relativ zu einer Mittellinie des Zahns positioniert sind, bei dem der gewellte Spalt von der Entlastungsöffnung aus verläuft.

9. Zahnrad nach einem der vorhergehenden Ansprüche, wobei der Spalt asymmetrisch innerhalb des Zahns positioniert ist.

10. Zahnrad nach einem der vorhergehenden Ansprüche, wobei das Zahnrad ein elastisches Material (38) aufweist, das innerhalb des Spalts positioniert ist.

11. Zahnrad nach Anspruch 10, wobei das elastische Material einen Hohlraum (40) bildet.

12. Zahnrad nach einem der vorhergehenden Ansprüche, wobei das Zahnrad eine Mehrzahl von Entlastungsöffnungen (32) bildet, und jeder Spalt von einer Entlastungsöffnung aus verläuft, und wobei das Zahnrad ein elastisches Material (38) aufweist, das innerhalb jeder Öffnung positioniert ist.

13. Zahnrad nach einem der Ansprüche 10 bis 12, wobei das elastische Material ein elastomerisches Material ist.

14. Kraftübertragungsanordnung mit einem Zahnrad, wobei das Zahnrad gemäß einem der vorhergehenden Ansprüche ausgebildet ist.

15. Verfahren zur Kraftübertragung, **dadurch gekennzeichnet, dass** das Verfahren das Vorsehen einer Kraftübertragungsanordnung umfasst, wobei die Kraftübertragungsanordnung nach Anspruch 14 ausgebildet ist.

## Revendications

1. Engrenage (12, 50, 112, 212, 312, 412, 712) destiné à être utilisé dans un agencement de transmission de puissance (10), l'engrenage comprend un corps (14), une pluralité de dents fendues (16, 116, 216, 316, 416, 716) faisant saillie vers l'extérieur à partir du corps, chaque dent comprend une première partie (20) et une seconde partie (22), qui font chacune saillie vers l'extérieur à partir du corps, chaque dent définissant un espace (24) entre la première partie et la seconde partie, **caractérisé en ce que** chaque partie de dent comprend une formation de verrouillage (26) qui correspond à la formation de verrouillage (26) de l'autre partie de dent pour limiter le mouvement relatif des parties de dent, à l'usage.

2. Engrenage selon la revendication 1, dans lequel les formations de verrouillage limitent le mouvement circonférentiel relatif.

3. Engrenage selon la revendication 1 ou 2, dans lequel les formations de verrouillage limitent le mouvement radial relatif.

4. Engrenage selon la revendication 3 lorsqu'elle dépend de la revendication 2, dans lequel les formations de verrouillage limitent à la fois le mouvement radial et le mouvement circonférentiel relatifs.

5. Engrenage selon l'une quelconque des revendications précédentes, dans lequel la formation de verrouillage d'une partie de dent comprend une saillie (28) et la formation de verrouillage de l'autre partie de dent définit un évidement (30).

6. Engrenage selon l'une quelconque des revendications précédentes, dans lequel l'engrenage définit une pluralité de trous de décharge (32), et chaque espace s'étend à partir d'un trou de décharge.

7. Engrenage (12, 50, 112, 212, 312, 712) destiné à être utilisé dans un agencement de transmission de puissance (10), **caractérisé en ce que** l'engrenage comprend un corps (14), une pluralité de dents fendues (16, 116, 216, 316, 716, 916) faisant saillie vers l'extérieur à partir du corps, chaque dent comprend une première partie (20) et une seconde partie (22), qui font chacune saillie vers l'extérieur à partir du corps, chaque dent définissant un espace convoluté (24) entre la première partie et la seconde partie, le corps d'engrenage définissant une pluralité de trous de décharge (32), chaque espace s'étendant à partir d'un trou de décharge.

8. Engrenage selon la revendication 7, dans lequel les trous de décharge (32) sont positionnés de manière asymétrique par rapport à une ligne centrale de la dent ayant l'espace convoluté qui s'étend à partir du trou de décharge.

9. Engrenage selon l'une quelconque des revendications précédentes, dans lequel l'espace est positionné de manière asymétrique à l'intérieur de la dent.

10. Engrenage selon l'une quelconque des revendications précédentes, dans lequel l'engrenage comprend un matériau élastique (38) qui est positionné à l'intérieur de l'espace.

11. Engrenage selon la revendication 10, dans lequel le matériau élastique définit une cavité (40).

12. Engrenage selon l'une quelconque des revendications précédentes, dans lequel l'engrenage définit une pluralité de trous de décharge (32), chaque espace s'étendant à partir d'un trou de décharge, et l'engrenage comprend un matériau élastique (38) qui est positionné à l'intérieur de chaque trou.

13. Engrenage selon l'une quelconque des revendications 10 à 12, dans lequel le matériau élastique est un matériau élastomère.

14. Agencement de transmission de puissance comprenant un engrenage, l'engrenage étant selon l'une quelconque des revendications précédentes.

15. Procédé pour transmettre la puissance, **caractérisé en ce que** le procédé comprend l'étape consistant à prévoir un agencement de transmission de puissance, l'agencement de transmission de puissance étant selon la revendication 14.
